# EUROPÄISCHE PATENTSCHRIFT

(11) **EP 4 184 042 B1**
(45) Veröffentlichungstag und Bekanntmachung des Hinweises auf die Patenterteilung: **08.04.2026**
(21) Anmeldenummer: 22204285.5
(22) Anmeldetag: 28.10.2022
(51) Int. Cl.: F16K 7/12, F16K 27/02

(54) **MEMBRANVENTIL MIT EINER SEKUNDAERABDICHTUNG**
DIAPHRAGM VALVE WITH A SECONDARY SEAL
VANNE À MEMBRANE AVEC JOINT D'ÉTANCHÉITÉ SECONDAIRE

(30) Priorität: 17.11.2021 DE 102021129940
(43) Veröffentlichungstag der Anmeldung: 24.05.2023
(73) Patentinhaber: SISTO Armaturen S.A., 6468 Echternach (LU)
(72) Erfinder: HACKENBERGER, Bernd, 6468 Echternach (LU)
(74) Vertreter: Busch, Tobias

(56) Entgegenhaltungen:
- EP-A1- 1 098 120
- EP-A1- 3 401 580
- WO-A2-2005/003605
- DE-A1- 2 325 814
- DE-U- 1 828 572
- DE-U1- 202015 102 015
- JP-A- H09 217 844

## Beschreibung

Die Erfindung betrifft ein Ventil mit einem Gehäuse, einer Haube und einer Membran, wobei die Membran einstückig aus einem polymeren Material ausgebildet ist und einen flächigen Bereich sowie einen wulstartigem Rand aufweist, der zwischen dem Gehäuse und der Haube in einer Kammerung verpresst ist, wobei das Gehäuseoberteil auch als Haube bezeichnet wird und den Überbau mit dem Antrieb der Membran bildet und die Antriebsspindel, die Abdichtung der Spindel und der Antrieb selbst integriert ist, wobei das Gehäuse eine tellerförmige Vertiefung aufweist, in die ein ringförmiger Vorsprung der Haube zur Einwirkung auf den Rand der Membran eingreift, wobei die Kammerung durch eine tellerförmige Vertiefung des Gehäuses und einen in diese eingreifenden ringförmigen Vorsprung der Haube gebildet ist, wobei das Gehäuse ein Auflageelement für einen Kontaktbereich der Haube zur Krafteinleitung aufweist und die Haube mit Befestigungselementen mit dem Gehäuse verbunden ist.

Ventile mit einer Membran können zur Dosierung von unterschiedlichen Fluiden eingesetzt werden, beispielsweise von Gasen, Dämpfen oder Flüssigkeiten. Beispielgebend können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel eine gleichbleibende und reproduzierbare Qualität zu gewährleisten. Aus diesen Ansprüchen resultiert die Notwendigkeit verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängen im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

Die Membran ist zwischen einem Gehäuseunterteil und einem Gehäuseoberteil fest eingespannt. Das Gehäuseoberteil wird auch als Haube bezeichnet und bildet den Überbau mit dem Antrieb der Membran. In der Haube ist die Antriebsspindel, die Abdichtung der Spindel und der Antrieb selbst integriert. Je nach Antrieb weist die Haube eine erhebliche Masse auf, die auf das Gehäuseunterteil einwirkt und deren Gewichtskräfte in dieses eingeleitet werden müssen.

Die Membranschraube ist ein stiftartiges Element, das formschlüssig in eine Lage der Membran integriert ist. Die Membranschraube ist über die Kolbenstange mit der Spindel des Antriebs verbunden. Auf diese Weise kann die Membran verformt werden.

Zur Stabilisierung der Membran sind auf der fluidabgewandten Seite und somit auf der haubenzugewandten Seite Abstützanordnungen in Form von auf der Membran aufliegenden Spiralen bekannt, die eine dauerhafte schädigende Verformung in der Offenstellung teilweise kompensieren können.

Die EP 3 366 961 B1 beschreibt ein Ventil mit einer Membran, die einen Rand aufweist, der in einer Kammerung angeordnet ist, die von einem Gehäuseteil und einer Haube gebildet wird. Zwischen dem Druckstück und der Membran ist ein Druckverteilungselement in Form einer Abstützspirale angeordnet, um die Membran in der Offenstellung abzustützen.

Die DE 18 28 572 U zeigt ein Membranventil, insbesondere elektromagnetisch gesteuertes Ventil, wobei der Membranrand in einen Ringspalt ragt, dessen Höhe größer als die Membrandicke ist, und Mittel zum Anpressen an wenigstens eine Begrenzungswand aufweist.

Die JP H09 217 844A offenbart ein Flüssigkeitssteuerventil, das am Kraftstoffzufuhrmesser einer Tankstelle vorgesehen ist, ist mit einer elektromagnetischen Ventileinheit mit zwei Magnetventilen als Antriebssteuermittel ausgestattet, um zwei große und kleine Durchflussmengen zu erhalten. Außerdem ist an einem Endteil des Ventilhauptkörpers des Fluidsteuerventils ein Montageteil zur Montage einer Membran ausgebildet und mit einer Druckkammer verbunden, die mit der Membran und einem Abdeckkörper ausgebildet ist, um einen Vorsteuerströmungsweg zu bilden. Dann wird in der oberen Montagefläche des Ventilhauptkörpers eine Ringnut gebildet, so dass sie den Vorsteuerströmungsweg umgibt, ein O-Ring wird eng in die Ringnut eingepasst, und der O-Ring wird in einem höhenmäßig unterschiedlichen Teil zwischen der oberen und unteren Montagefläche angeordnet.

Die DE 20 2015 102 015 U1 beschreibt ein Membranventil, mit einem Ventilkörper, der zumindest einen Strömungskanal zur Fluiddurchströmung aufweist, einem ein Gehäuse aufweisenden Ventilantrieb und einer Membrane, welche durch den Ventilantrieb ausgelenkt werden kann, um den Strömungskanal wahlweise zu öffnen und zu schließen, wobei die Membrane randseitig zwischen Ventilkörper und Ventilantrieb fluiddicht axial geklemmt ist und die Klemmung der Membrane durch eine Schrauben-Muttern-Verbindung erfolgt, wobei die Schraube und die Mutter die Membrane in Betätigungsrichtung des Ventilantriebs gesehen randseitig umgeben und eines der beiden durch Schraube und Mutter gebildeten Teile nicht drehbar am Ventilkörper oder am Ventilantrieb vorgesehen ist, und wobei das andere der beiden Teile ein- bzw. aufschraubbar und rotatorisch beweglich ist. Das bewegliche Teil ist durch ein Wälzlager am Ventilantrieb oder am Ventilkörper gelagert.

In der EP 3 401 580 A1 wird ein Hubventil beschrieben, das insbesondere für aseptische Produktleitungen ausgebildet ist, und ein Ventilgehäuse mit Leitungsanschlüssen und einem dazwischen im Ventilgehäuse ausgebildeten Ventilsitz umfasst sowie ein im Ventilgehäuse axial verstellbares und mit dem Ventilsitz zusammenwirkendes Schließelement und eine Membran, die sich um das Schließelement herum und von diesem bis zu einer gehäuseseitigen Einspannstelle erstreckt.

In der WO 2005/003605 A2 wird ein Membranventil zur Verwendung in einem Atomschichtabscheidungssystem (ALD) offenbart. In einer Ausführungsform bildet ein Heizkörper einen wärmeleitenden Pfad zwischen der Membran und dem Ventilkörper, um eine Betriebstemperatur an der Membran aufrechtzuerhalten und die Kondensation oder das Einfrieren von Hochtemperatur-ALD-Vorläufergasen im Ventilkanal zu verhindern.

Dokument EP 1 098 120 A1 offenbart ein Membranventil mit einer Membran, mit einer verstärkender Gewebeeinlage und einem der Halterung der Membran in einer durch zwei Gehäuseteile gebildeten Kammer dienenden wulstartig verdickten Rand.

Die Einwirkung des Fluids bei gegebenem Druck und entsprechender Fluidtemperatur führt zu einer Relaxation der Elastormerbestandteile der Membran. Bei gekammerten Membranen kann die Spannung der Membran durch ein Nachziehen und Nachspannen nicht wieder erhöht werden. Dadurch können kleine Undichtigkeiten am Ventil entstehen und das Fluid kann nach außen treten. Mit zunehmender Dauer der reduzierten Spannung in der Membran kann es zu einer irreversiblen Schädigung der Membran kommen, wodurch auch größere Mengen des Fluids aus einem Ventil austreten können. Dies ist insbesondere bei heißen sowie toxischen Medien als auch bei Fluiden in Nuklearanwendungen unerwünscht.

Aufgabe der Erfindung ist es, ein Ventil mit einer Membran bereitzustellen, das einen Stoffaustritt vermeiden und einen sicheren Ventilbetrieb gewährleisten kann. Darüber hinaus soll die Membran den Anforderungen des dauerhaften Betriebes gerecht werden und dabei äußerst langlebige Eigenschaften bewahren.

Diese Aufgabe wird erfindungsgemäß durch ein Ventil mit einer Membran gemäß den Merkmalen des Anspruchs 1 gelöst. Bevorzugte Varianten sind den Unteransprüchen, der Beschreibung und den Zeichnungen zu entnehmen.

Gemäß der Erfindung ist zwischen der Kammerung und dem Auflageelement ein Hohlraum zur Positionierung bei der Montage angeordnet ist, wobei mindestens ein Dichtelement zwischen dem Auflageelement des Gehäuses und dem Kontaktbereich der Haube angeordnet ist, wobei das Dichtelement zwischen den Befestigungselementen und der tellerförmigen Vertiefung des Gehäuses angeordnet ist.

Das Auflageelement ist ein Teil des Gehäuses und ist somit einstückig mit dem Gehäuse ausgeführt. Dabei weist das Auflageelement eine stirnseitige Auflagefläche und eine umlaufende Innenwandfläche auf, wobei an beide Flächen der Kontaktbereich der Haube direkt angrenzt.

Der Kontaktbereich ist der Bereich der Haube, der direkt mit dem Auflageelement des Gehäuses in Kontakt steht. Dabei weist der Kontaktbereich eine Abstützfläche auf, die auf der stirnseitigen Auflagefläche des Auflageelements aufliegt und eine angrenzende Kontaktfläche, die in direkten Kontakt mit der umlaufenden Innenwandfläche des Auflageelements steht.

Als Dichtelement wird ein Element bezeichnet, das unerwünschte Stoffübergänge von einem Raum zu einem anderen Raum verhindert oder mindestens deutlich begrenzt.

Bei einem Ventil mit einer gekammerten Membran weist die Membran vorzugsweise einen Rand auf, der zwischen einer tellerförmigen Vertiefung des Gehäuses und einem ringförmigen Vorsprung der Haube verpresst ist. Die Kraft, hervorgerufen durch die Masse der Haube inklusive Membranantrieb, wird über das Auflageelement der Haube in den Kontaktbereich des Gehäuses eingeleitet. Dabei ist die Haube mit Befestigungselementen mit dem Gehäuse verbunden und fixiert.

In einer bevorzugten Variante der Erfindung ist ein Dichtelement als Sekundärdichtung zwischen dem Auflageelement des Gehäuseunterteils und dem Kontaktbereich der Haube angeordnet und verhindert wirksam einen Austritt des Fluids auch im Falle einer schadhaften Membran, die im unbeschadeten Zustand die Funktion einer Primärdichtung erfüllt.

Alternativ können aber auch zwei oder drei Dichtelemente als Sekundärdichtung vorgesehen sein. Dabei weisen die Dichtelemente keinen unmittelbaren Kontakt zueinander auf. Zudem können die Dichtelemente alle in dem Auflageelement des Gehäuses oder alle in dem Kontaktbereich der Haube oder sowohl in dem Auflageelement des Gehäuses als auch in dem Kontaktbereich der Haube angeordnet sein.

In einer Variante der Erfindung kann das Dichtelement in der stirnseitigen Auflagefläche oder in der umlaufenden Innenwandfläche des Auflageelements angeordnet sein.

Bei einer alternativen Variante der Erfindung kann das Dichtelement in der Abstützfläche oder in der angrenzenden Kontaktfläche des Kontaktbereichs angeordnet sein.

Vorzugsweise ist das Dichtelement in einer Nut angeordnet, die in den Kontaktbereich der Haube eingebracht ist. Dadurch können keine Kräfte auf das Dichtelement wirken und dessen Verschleiß herbeiführen. Zudem erfährt das Dichtelement innerhalb der Nut während des schadenfreien Betriebes des Ventils keinen Medienkontakt, wodurch das Dichtelement vor dem Eintritt einer Relaxation der Ventilmembran besonders geschützt angeordnet ist und im Schadensfall der Membran die erwünschte Dichtheit des Ventils sicher gewährleisten kann.

Alternativ und/oder zusätzlich kann das Dichtelement in einer Nut angeordnet sein, die in dem Auflageelement des Gehäuses eingebracht ist.

In einer besonders günstigen Variante der Erfindung ist das Dichtelement in dem Kontaktbereich der Haube mit dem Gehäuse eingebracht, der zwischen den Befestigungselementen und der tellerförmigen Vertiefung des Gehäuses verläuft. Auf diese vorteilhafte Weise kann der sichere Betrieb des Ventils mit einer Membran besonders gut gewährleistet und ein unerwünschter Fluidaustritt sicher verhindert werden.

Zur Gewährleistung einer dauerhaften Dichtwirkung weist das Dichtelement vorzugsweise ein größeres Volumen als die Nut zum Einpressen und vollständigen Füllen der Nut auf.

Vorzugsweise ist das Dichtelement in Form eines klassischen O-Rings ausgeführt.

In einer besonders bevorzugten Variante der Erfindung ist das Dichtelement elastisch, vorzugsweise als Elastomerdichtelement, ausgebildet. Dabei bezeichnet der Begriff elastisch das Vermögen des Dichtelements, unter Krafteinwirkung seine Form zu verändern und bei Wegfall der einwirkenden Kraft in die Ursprungsform zurückzukehren. Diese Eigenschaft der Sekundärdichtung gewährleistet den sicheren Betrieb des Ventils mit einer Membran auch im Falle eines Membranschadens und verhindert wirksam einen unerwünschten Fluidaustritt aus dem Ventil.

In einer vorteilhaften Ausführungsvariante der Erfindung ist das Dichtelement besonders druck- und temperaturbeständig ausgeführt. Dabei kann das Dichtelement aus dem gleichen Material wie die Membran gefertigt sein. Darüber hinaus sind auch unterschiedliche Werkstoffausführungen denkbar, die zuverlässig die Dichtfunktion einer Sekundärdichtung erfüllen.

Idealerweise kann zwischen der Kammerung der Membran und dem Auflageelement des Gehäuses, insbesondere an die tellerförmige Vertiefung des Gehäuses, auf die die Membran bei der Montage aufgelegt wird, ein partieller Hohlraum zur Positionierung der Membran und zur Montageerleichterung anschließen.

In einer günstigen Variante der Erfindung ist ein Sensor zur Detektion einer Undichtigkeit zwischen Primär- und Sekundärdichtung angeordnet, so dass ein erforderlicher Membrantausch angezeigt werden kann. Dadurch lässt sich im Rahmen einer zustandsorientierten Wartung besonders sicher gewährleisten, dass das Dichtelement als Sekundärdichtung einen Fluidaustritt bis zum Membrantausch verhindert. Beispielsweise kann der Sensor per Funk oder gedichteter Datenleitung mit einem übergeordneten Prozessleitsystem kommunizieren.

Weitere Merkmale und Vorteile der Erfindung ergeben sich aus der Beschreibung von Ausführungsbeispielen anhand von Zeichnungen und aus den Zeichnungen selbst.

Dabei zeigt:
- Fig. 1: eine Explosionsdarstellung eines Membranventils,
- Fig. 2: eine Schnittdarstellung eines Ventils mit einer Membran,
- Fig. 3: eine Detaildarstellung der Anordnung des Dichtelements,
- Fig. 4: eine weitere Detaildarstellung der Anordnung des Dichtelements,
- Fig. 5: eine alternative Detaildarstellung der Anordnung des Dichtelements,
- Fig. 6: eine vierte Variante der Detaildarstellung der Anordnung des Dichtelements.

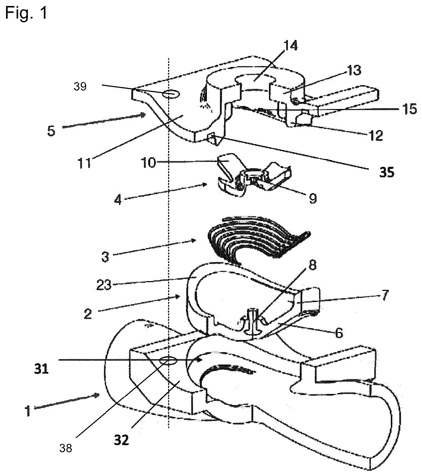

Fig. 1 zeigt eine Explosionszeichnung eines Ventils mit einer Membran 2. Das Ventil umfasst ein Gehäuse 1, eine Membran 2, ein Druckverteilungselement 3, ein Druckstück 4 und eine Haube 5.

In diesem Ausführungsbeispiel ist das Druckverteilungselement 3 im Einsatz einer gekammerten Membran 2 dargestellt. Die Membran 2 ist einstückig aus einem polymeren Material ausgebildet und weist einen flächigen Bereich 6 auf, an den sich ein Rand 7 anschließt. Der flächige Bereich 6 ist nach unten gewölbt ausgebildet. Der Rand 7 erstreckt sich mit Blick auf die Zeichnung in vertikaler Richtung nach oben. Der flächige Bereich 6 ist tellerförmig. Der Rand 7 ist wulstartig ausgebildet.

Der Rand 7 der Membran 2 ragt in vertikaler Richtung nach oben und weist auf seiner Oberseite eine umlaufende Stirnfläche 23 auf. Die Stirnfläche 23 ist gewölbt ausgebildet. Somit liegt die Stirnfläche 23 des Randes 7 der Membran 2 nicht in einer horizontalen Ebene, sondern ist in vertikaler Richtung gekrümmt. Die Wölbung der Stirnfläche 23 weist im Bereich des Membransteges bzw. des Membranwehrs ihren tiefsten Punkt und steigt dann zu beiden Seiten hin an, sodass im Eintrittsbereich die Stirnfläche 23 des Randes 7 der Membran 2 die höchste Erhebung hat, dann stetig abnimmt bis zu dem Ventilsitz bzw. dem Steg oder dem Wehr und dann wieder zum Austritt hin ansteigt und dann wieder auf die gleiche Höhe zunimmt. Die Wölbung der Stirnfläche 23 des Randes 7 der Membran 2 verläuft somit parallel zur Strömungsrichtung.

Im Ausführungsbeispiel ist die Membran 2 so ausgebildet, dass in der geschlossenen Stellung die geringste Spannung im Material der Membran 2 wirkt. Bei einer Öffnung des Ventils wird die Membran 2 verformt und die Spannung im Membranmaterial steigt an. In der Membran 2 ist formschlüssig ein Element eingebettet, das mit einem nicht dargestellten Antrieb zur Verformung der Membran 2 in Verbindung steht. Bei dem Element 8 handelt es sich im Ausführungsbeispiel um eine Membranschraube. Das Element 8 steht mit einem Druckstück 4 in Verbindung. Das kreuzförmige Druckstück 4 kann innerhalb der Haube in vertikaler Richtung mittels eines nicht dargestellten Antriebs verschoben werden. Das Druckverteilungselement 3 verteilt den vom Druckstück 4 ausgeübten Druck auf den flächigen Bereich 6 der Membran 2.

Das Druckstück 4 weist eine innere Öffnung 9 zur Verbindung mit einem Antrieb auf. Nach außen erstrecken sich vier Ausleger 10, sodass das Druckstück 4 in der Draufsicht kreuzförmig ausgebildet ist. Die Haube 5 weist einen flächigen Kontaktbereich 11 auf, der nach unten gewölbt ausgebildet ist. Nach unten erstreckt sich ein umlaufender ringförmiger Vorsprung 12. Zusammen mit der tellerförmigen Vertiefung 31, in die auf der Innenseite der ringförmige Vorsprung 12 eingreift und auf der Außenseite des Auflageelements 32 angrenzt, wird die Kammerung 36 für den Rand 7 der Membran 2 gebildet.

Mittig weist die Haube 5 einen hohlzylinderförmig ausgebildeten Hals 13 auf, mit einer kreisförmigen Öffnung 14 für nicht dargestellte Antriebselemente, wie beispielsweise eine Spindel. Die Haube 5 weist einen Hohlraum 15 auf, in dem das Druckstück 4 in vertikaler Richtung verschieblich angeordnet ist. Dabei wird das Druckverteilungselement 3 von einer begrenzenden Schulter 15 der Haube 5 in der Offenstellung an die Membran 2 gedrückt.

Das Auflageelement 32 des Gehäuses 1 weist in dieser Ausführungsvariante der Erfindung vier Bohrungen 38 auf, die in einer Flucht zu den vier Bohrungen 39 des Kontaktbereichs 11 der Haube 5 angeordnet sind. Durch die Bohrungen 38 und 39 werden die Befestigungselemente 34 geführt, durch die die Haube 5 mit dem Gehäuse 1 verbunden ist.

Zur Bildung einer Sekundärabdichtung im Falle eines Membranversagens weist der Kontaktbereich 11 der Haube 5 eine Nut 35 auf, in die ein Dichtelement 33 eingeführt werden und mithilfe einer verpressten Auflage durch das Auflageelement 32 einen Medienaustritt wirksam verhindern kann, wodurch ein sicherer Betrieb des Ventils gewährleistet werden kann.

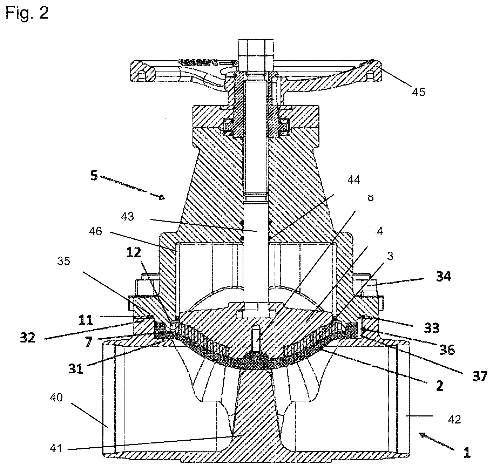

Das in Fig. 2 dargestellte Ventil mit einer Membran 2 besitzt ein Gehäuse 1, welches Anschlüsse 40, 42 und ein Wehr 41 umfasst. Das Wehr 41 dient als Sitzfläche für die Membran 2. Die Membran 2 ist mithilfe der Kammerung 36 eingespannt zwischen dem Gehäuse 1 und der Haube 5, während die Haube 5 mittels der Befestigungselemente 34 mit dem Gehäuse 1 verbunden ist.

Die Kammerung 36 wird gebildet durch die tellerförmige Vertiefung 31, auf der die Membran 2 aufliegt und der wulstartige Rand 7 in vertikaler Richtung wegragt. Dabei liegt der Rand 7 an dem Auflageelement 32 des Gehäuses 1 an. Die tellerförmige Vertiefung 31 und das Auflageelement 32 bilden eine begrenzende Schulter für den Rand 7 der Membran 2. Von außen nach innen betrachtet greift der ringförmige Vorsprung 12 der Haube 5 hinter den wulstartigen Rand 7 und drückt die Membran 2 auf den tellerförmigen Vorsprung 31 und komplementiert die Kammerung 36 der Membran 2. Zur Positionierung bei der Montage ist ein kleiner Hohlraum 37 vorgesehen.

Innerhalb der Haube 5 im Kontaktbereich 11 ist ein Dichtelement 33 angeordnet, das die Funktion einer Sekundärdichtung im Falle eines Membranschadens erzielt. In diesem Ausführungsbeispiel ist das Dichtelement 33 als elastischer O-Ring ausgeführt. Auf diese vorteilhafte Weise kann der unerwünschte Austritt gefährlicher Medien aus dem Ventil wirksam vermieden und der sichere Betrieb gewährleistet werden.

In dieser Ausführungsvariante der Erfindung ist das Dichtelement 33 elastisch ausgebildet, in einer Nut 35 angeordnet, wobei das Dichtelement 33 ein minimal größeres Volumen zur Gewährleistung einer Sekundärdichtung aufweist. Die Nut 35 mit dem Dichtelement 33 ist räumlich zwischen den Befestigungselementen 34 und der tellerförmigen Vertiefung 31 des Gehäuses 1 angeordnet.

In der Haube 5 sind die zur Betätigung der Membran 2 notwendigen Elemente integriert, wie beispielsweise ein Antrieb 45, der im Ausführungsbeispiel als Handrad ausgeführt ist, sowie eine Spindel 43. An der Spindel 43 ist ein gewölbtes Druckstück 4 befestigt. Das Druckstück 4 ist verschieblich in der Haube 5 angeordnet und wird von einer inneren Wand 46 der Haube 5 geführt. Mithilfe des Elements 8 ist die Membran 2 mit dem Druckstück 4 verbunden. Durch Betätigung des Antriebs 45 wird über die Spindel 43 eine vertikale Verschiebung des Druckstücks 4 bewirkt, sodass sich die Membran 2 verformt und der freie Querschnitt zwischen dem Wehr 41 und der Membran 2 vergrößert bzw. verkleinert werden kann. Zwischen Druckstück 4 und der Membran 2 ist zur besseren Kraftübertragung bei gleichzeitiger Abstützung ein Druckverteilungselement 3 angeordnet. Die Spindel 43 ist mit den Dichtungen 44 zusätzlich gegen einen unerwünschten Medienaustritt im Falle eines Membranschadens versehen.

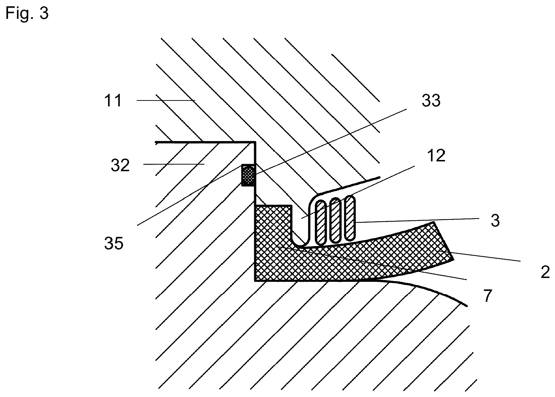

In den Fig. 3 bis 6 sind verschiedene Sekundärdichtungsvarianten hinsichtlich der Anordnung der Nut 35 mit dem darin eingefügten Dichtelement 33 im Bereich des Kontaktbereichs 11 sowie des Auflageelements 32 dargestellt.

Fig. 3 zeigt eine Variante, bei der das Dichtelement 33 in der Nut 35 angeordnet ist, wobei die Nut 35 in der umlaufenden Innenwandfläche des Auflageelements 32 positioniert ist. Das Dichtelement 33, das als elastischer O-Ring ausgeführt ist, wirkt dabei dichtend mit der angrenzenden Kontaktfläche des Kontaktbereichs 11 zusammen. An die angrenzende Kontaktfläche des Kontaktbereichs 11 schließt einstückig der ringförmige Vorsprung 12 an, der auf den Rand 7 der Membran 2 einwirkt.

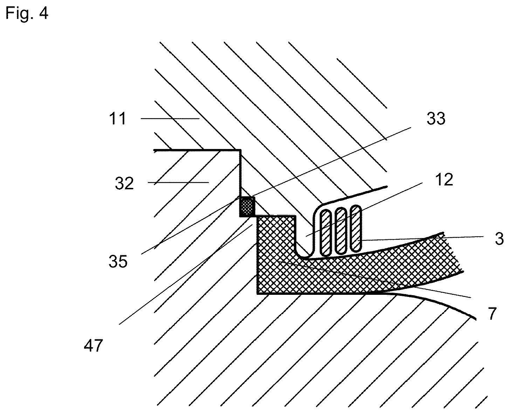

In Fig. 4 ist die Nut 35 an der tiefsten Stelle der angrenzenden Kontaktfläche des Kontaktbereich 11 positioniert. In der dargestellten Ausführungsvariante weist das Auflageelement 32 einen Absatz 47 auf, der zusammen mit der Nut 35 eine Positionierung des Dichtelements 33 erzielt.

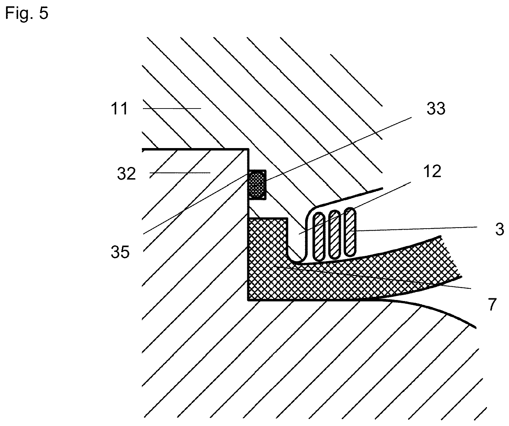

Die Fig. 5 zeigt eine Anordnung der Nut 35 in der angrenzenden Kontaktfläche des Kontaktbereichs 11. Das in der Nut 35 positioniert Dichtelement 33 wirkt mit der umlaufenden Innenwandfläche des Auflageelements 32 dichtend zusammen.

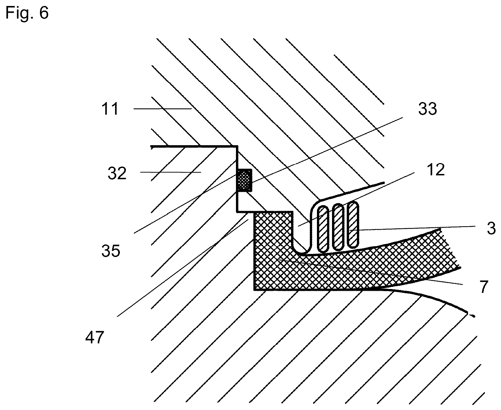

In der Fig. 6 ist die Anordnung der Nut 35, wie in Fig. 5 ausgeführt, wobei das Auflageelement 32 einen Absatz 47 aufweist, der direkt an den Rand 7 der Membran 2 angrenzt.

In allen dargestellten Varianten der Anordnung der Nut 35 mit dem Dichtelement 33 in den Fig. 3 bis 6 kann auf vorteilhafte Weise der unerwünschte Austritt gefährlicher Medien aus dem Ventil wirksam vermieden und der sichere Betrieb gewährleistet werden.

## Patentansprüche

1. Ventil mit einem Gehäuse (1), einer Haube (5) und einer Membran (2), wobei die Membran (2) einstückig aus einem polymeren Material ausgebildet ist und einen flächigen Bereich (6) sowie einen wulstartigem Rand (7) aufweist, der zwischen dem Gehäuse (1) und der Haube (5) in einer Kammerung (36) verpresst ist,
- wobei die Haube (5) den Überbau mit dem Antrieb der Membran (2) bildet und die Antriebsspindel (43), die Abdichtung der Spindel (43) und der Antrieb (45) selbst integriert sind,
- wobei das Gehäuse (1) eine tellerförmige Vertiefung (31) aufweist, in die ein ringförmiger Vorsprung (12) der Haube (5) zur Einwirkung auf den Rand (7) der Membran (2) eingreift,
- wobei die Kammerung (36) durch die tellerförmige Vertiefung (31) des Gehäuses (1) und den in diese eingreifenden ringförmigen Vorsprung (12) der Haube (5) gebildet ist,
- wobei das Gehäuse (1) ein Auflageelement (32) für einen Kontaktbereich (11) der Haube (5) zur Krafteinleitung aufweist,
- und die Haube (5) mit Befestigungselementen (34) mit dem Gehäuse (1) verbunden ist,
**dadurch gekennzeichnet, dass** zwischen der Kammerung (36) und dem Auflageelement (32) ein Hohlraum (37) zur Positionierung bei der Montage angeordnet ist, wobei zwischen dem Auflageelement (32) und dem Kontaktbereich (11) mindestens ein Dichtelement (33) angeordnet ist, wobei das Dichtelement (33) zwischen den Befestigungselementen (34) und der tellerförmigen Vertiefung (31) des Gehäuses (1) angeordnet ist.

2. Ventil nach Anspruch 1, **dadurch gekennzeichnet, dass** das Dichtelement (33) in einer Nut (35) angeordnet ist, die im Kontaktbereich (11) der Haube (5) verläuft.

3. Ventil nach einem der Ansprüche 1 oder 2, **dadurch gekennzeichnet, dass** das Dichtelement (33) in einer Nut (35) eingebracht ist, die in dem Auflageelement (32) des Gehäuses (1) verläuft.

4. Ventil nach einem der Ansprüche 1 bis 3, **dadurch gekennzeichnet, dass** das Dichtelement (33) ein größeres Volumen als die Nut (35) zum Einpressen und vollständigen Füllen der Nut (35) aufweist.

5. Ventil nach einem der Ansprüche 1 bis 4, **dadurch gekennzeichnet, dass** das Dichtelement (33) elastisch ausgebildet ist.

## Claims

1. Valve having a housing (1), having a cover (5) and having a diaphragm (2), wherein the diaphragm (2) is formed in one piece from a polymer material and has an areal region (6) and a bead-like rim (7), which is pressfitted between the housing (1) and the cover (5) in a chambering (36),
- wherein the cover (5) forms the superstructure with the drive of the diaphragm (2), and the drive spindle (43), the seal of the spindle (43) and the drive (45) itself are integrated,
- wherein the housing (1) has a plate-shaped depression (31) into which an annular projection (12) of the cover (5) engages in order to act on the rim (7) of the diaphragm (2),
- wherein the chambering (36) is formed by the plate-shaped depression (31) of the housing (1) and the annular projection (12) of the cover (5) that engages into it,
- wherein the housing (1) has a bearing element (32) for a contact region (11) of the cover (5) for introduction of force,
- and the cover (5) is connected to the housing (1) by way of fastening elements (34),
**characterized in that** a cavity (37) for positioning during assembly is arranged between the chambering (36) and the bearing element (32), wherein at least one sealing element (33) is arranged between the bearing element (32) and the contact region (11), wherein the sealing element (33) is arranged between the fastening elements (34) and the plate-shaped depression (31) of the housing (1).

2. Valve according to Claim 1, **characterized in that** the sealing element (33) is arranged in a groove (35) which runs in the contact region (11) of the cover (5).

3. Valve according to either of Claims 1 and 2, **characterized in that** the sealing element (33) is introduced in a groove (35) which runs in the bearing element (32) of the housing (1).

4. Valve according to one of Claims 1 to 3, **characterized in that** the sealing element (33) has a larger volume than the groove (35) for pressing in and complete filling of the groove (35).

5. Valve according to one of Claims 1 to 4, **characterized in that** the sealing element (33) is of elastic form.

## Revendications

1. Soupape avec un boîtier (1), un capot (5) et une membrane (2), où la membrane (2) est réalisée d'une seule pièce à partir d'un matériau polymère et présente une zone plane (6) et un bord en forme de bourrelet (7) qui est pressé entre le boîtier (1) et le capot (5) dans une chambre (36),
- où le capot (5) forme la superstructure avec l'entraînement du diaphragme (2) et la broche d'entraînement (43), le joint de la broche (43) et l'entraînement (45) lui-même sont intégrés,
- où le boîtier (1) présente un renfoncement en forme de plateau (31), dans lequel s'engage une saillie annulaire (12) du capot (5) pour agir sur le bord (7) de la membrane (2),
- où la chambre (36) est formée par le renfoncement en forme de plateau (31) du boîtier (1) et la saillie annulaire (12) du capot (5) qui s'engage dans celui-ci,
- où le boîtier (1) présente un élément d'appui (32) pour une zone de contact (11) du capot (5) pour l'introduction de force,
- et le capot (5) est relié au boîtier (1) par des éléments de fixation (34),
**caractérisé en ce qu'**une cavité (37) pour le positionnement lors du montage est disposée entre la chambre (36) et l'élément d'appui (32), où au moins un élément d'étanchéité (33) est disposé entre l'élément d'appui (32) et la zone de contact (11), où l'élément d'étanchéité (33) est disposé entre les éléments de fixation (34) et le renfoncement en forme de plaque (31) du boîtier (1).

2. Soupape selon la revendication 1, **caractérisée en ce que** l'élément d'étanchéité (33) est disposé dans une rainure (35) qui s'étend dans la zone de contact (11) du capot (5).

3. Soupape selon l'une des revendications 1 ou 2, **caractérisée en ce que** l'élément d'étanchéité (33) est introduit dans une rainure (35) qui s'étend dans l'élément d'appui (32) du boîtier (1).

4. Soupape selon l'une des revendications 1 à 3, **caractérisée en ce que** l'élément d'étanchéité (33) présente un volume plus grand que la rainure (35) pour enfoncer et remplir complètement la rainure (35).

5. Soupape selon l'une des revendications 1 à 4, **caractérisée en ce que** l'élément d'étanchéité (33) est réalisé sous forme élastique.
